# EUROPÄISCHE PATENTSCHRIFT

(11) **EP 0 545 273 B1**
(45) Veröffentlichungstag und Bekanntmachung des Hinweises auf die Patenterteilung: **15.11.1995**
(21) Anmeldenummer: 92120154.7
(22) Anmeldetag: 26.11.1992
(51) Int. Cl.: F16K 17/16

(54) **Druckentlastungsvorrichtung**
Relief device
Dispositif de détente

(30) Priorität: 05.12.1991 DE 4140088
(43) Veröffentlichungstag der Anmeldung: 09.06.1993
(73) Patentinhaber: KRIMM, Alexander, D-46147 Oberhausen (DE)
(72) Erfinder: KRIMM, Alexander, D-46147 Oberhausen (DE)

(56) Entgegenhaltungen:
- EP-A- 0 005 931
- DE-A- 3 431 795
- US-A- 3 685 686
- US-A- 4 434 905
- SOVIET INVENTIONS ILLUSTRATED Section PQ, Week K40, 16. November 1983 Derwent Publications Ltd., London, GB; Class Q66, AN 83-780892 & SU-A-976 188 (THERM ENG RES INST)

## Beschreibung

Die Erfindung betrifft eine aus einem zweiteiligen Rahmen bestehende Druckentlastungsvorrichtung. Die einander gegenüberstehenden Stirnflächen (Dichtflächen) der Rahmenteile schließen, zusammengefügt, dicht ab. Jeder Rahmenteil enthält auf der Innenseite eine mit der stirnseitigen Oberfläche abschließende Vertiefung, so daß sich bei Zusammenfügen der Rahmenteile eine über den gesamten Umfang des Rahmens verlaufende Rinne ausbildet. Zwischen die Rahmenteile wird eine Berstscheibe eingespannt. Die Vertiefungen auf den Innenseiten der Rahmenteile dienen zur Aufnahme von Messern, von Distanzscheiben oder Abschlußblöcken (auch kurz als Blöcke bezeichnet).

Halterungen, die zusammen mit Berstscheiben eine Druckentlastungsvorrichtung ergeben, sind bekannt. Sie werden üblicherweise als vorgefertigte Einheiten in Rohrleitungen, Gefäße, Reaktionsapparate und ähnliche technische Hohlkörper zum Schutz gegen unzulässige Druckänderungen eingebaut. Durch die Vorfertigung der Druckentlastungsvorrichtungen erleichtert und beschleunigt man ihre Auswechselung in Leitungen und Apparaten und stellt zudem sicher, daß die empfindlichen Berstscheiben keinen Schaden durch unsachgemäße Behandlung, z.B. beim Einsetzen in die Halterung, erleiden.

Es ist ferner bekannt, das Aufreißen der Berstscheibe durch Einsatz eines Reißdornes oder einer Messergruppierung zu unterstützen. Um ein zuverlässiges Aufplatzen der Scheibe zu gewährleisten, wird die Anreißvorrichtung im Bereich der Scheibenmitte angeordnet. Eine genaue Anpassung an den vorgegebenen Ansprechdruck wird dadurch erreicht, daß man den Abstand zwischen Reißdorn oder Messerschneiden gegenüber der Scheibenebene verändert. In einer praktischen Ausführungsform wird hierzu die Aufreißvorrichtung auf eine Gewindestange gesetzt. Durch Variation des Abstandes zwischen Dorn oder Messerschneide und Berstscheibenebene ist es auch möglich, die Druckentlastungsvorrichtung ohne Auswechseln der Berstscheibe auf andere Ansprechdrücke umzustellen.

Schließlich hat man für besondere Anwendungszwecke die Messergruppierung nicht nur auf einer Seite der Berstscheibe angeordnet, sondern auf beiden Seiten, so daß die Druckentlastungsvorrichtung auch nach beiden Seiten wirksam ist.

Ein Nachteil der vorstehend beschriebenen, bekannten Druckentlastungsvorrichtungen ist, daß die durch die Berstscheibe verschlossene Hohlkörperfläche nicht momentan über den gesamten Umfang freigegeben wird und zwar auch dann nicht, wenn eine Aufreißvorrichtung mitverwendet wird. Setzt man z.B. vier kreuzförmig angeordnete Messerschneiden ein, so wird die Berstscheibe segmentförmig aufgeschnitten. Insbesondere in Anwendungsfällen, bei denen eine Entlastung bei relativ kleinen Drücken erfolgen muß, kann das vollständige Aufreißen der Berstscheibe zeitlich verzögert und die ungehinderte Strömung des ausoder eintretenden Mediums beeinträchtigt werden. Darüber hinaus befriedigt die bisher übliche Lagerung der Aufreißvorrichtung auf einer Gewindestange nicht immer, weil die Vorrichtung schwierig zu handhaben ist.

Es bestand daher die Aufgabe, eine Druckentlastungsvorrichtung bereitzustellen, die bei Auftreten unerwünschter Druckänderungen ohne Verzögerung die gesamte, von der Berstscheibe verschlossene Fläche freigibt, ohne daß die Vorteile bekannter Vorrichtungen der gleichen Gattung verlorengehen oder beeinträchtigt werden.

Diese Aufgabe wird erfindungsgemäß gelöst durch eine Druckentlastungsvorrichtung, die aus einem zweiteiligen Rahmen 1 besteht, zwischen dessen Teile 4, 5 eine Berstscheibe 2 eingespannt ist. Sie ist dadurch gekennzeichnet, daß jeder Rahmenteil eine mit der Dichtfläche abschließende Vertiefung 6 zur Aufnahme jeweils eines Messers 7, 8 oder jeweils eines mit der Dichtfläche stumpf abschließenden Blockes 10 oder eines Messers und eines Blockes enthält.

Die erfindungsgemäße Druckentlastungsvorrichtung zeichnet sich dadurch aus, daß das oder die Messer, die das Aufreißen der Bestscheibe auslösen oder unterstützen über den gesamten Umfang der Berstscheibe wirken. Sie wird daher nicht nur angeritzt und zunächst partiell zerlegt, sobald eine unerwünschte Druckänderung eintritt, sondern über ihren gesamten Umfang aus der Vorrichtung herausgeschnitten, so daß die Entlastungsöffnung sofort und mit der ganzen Oberfläche wirksam wird. Der Aufbau eines Strömungswiderstandes durch die geborstene Berstscheibe wird dadurch ausgeschlossen. Die Druckentlastungsvorrichtung läßt sich den verschiedensten Anforderungen in einfacher Weise anpassen, spricht auf Überdruck und/oder Unterdruck an und ist auch für den Einatz in niedrigen Druckbereichen sehr geeignet.

Ein wesentliches Merkmal der neuen Druckentlastungsvorrichtung ist die in jedem der beiden Rahmenteile vorhandene Vertiefung. Sie wird um den ganzen Umfang jedes Rahmenteils geführt und dient zur Aufnahme von Messern, Distanzscheiben und/oder Blöcken.

Die in der Form der Rahmenteile gestalteten Messer haben die Aufgabe, die Berstscheibe herauszutrennen. Zur Einstellung auf bestimmte Berstdrücke kann der Abstand der Messer gegenüber der Berstscheibenebene in einfacher Weise durch Einfügen von Distanzscheiben verändert werden. Eine aufwendige und auch empfindliche Verstelleinrichtung unter Verwendung einer Gewindestange wird dadurch entbehrlich.

Durch Einsetzen von Messern in nur einer Rahmenhälfte wird die Druckentlastungsvorrichtung entweder nur bei Druckerhöhung oder Druckabnahme wirksam. Eine Ausführungsform der erfindungsgemäßen Vorrichtung, in der beide Rahmenteile mit Messern versehen sind, kann dementsprechend eingesetzt werden, wenn sowohl ein bestimmter Überdruck als auch ein bestimmter Unterdruck vermieden werden soll.

Um zu verhindern, daß sich die herausgetrennte und vom strömenden Medium transportierte Berstscheibe in der Entspannungsleitung festsetzt, kann es sich empfehlen, die Messerschneide über einen geringer Umfang abzustumpfen. Dann wird wohl die Entlastungsöffnung über den gesamten Umfang freigegeben, die Berstscheibe aber über eine nicht durchgetrennte Zunge in der Druckentlastungsvorrichtung fixiert.

Bei Ausrüstung nur einer Rahmenhälfte mit einem Messer ist die Gegenseite mit einem Block zu versehen. Er schließt stumpf mit der Dichtfläche ab und bildet mit dieser eine ebene Fläche. Schließlich können auch die Vertiefungen beider Rahmenteile mit Blöcken versehen werden, so daß die erfindungsgemäße Vorrichtung auch dann eingesetzt werden kann, wenn eine Aufreißvorrichtung im speziellen Fall nicht erforderlich ist.

Die Messerschneiden verlaufen üblicherweise parallel zur Berstscheibenebene, treffen also auf die Ebene unter einem Winkel von 90°. Abhängig vom Anwendungsfall kann es aber zweckmäßig sein, die Messerschneiden gegenüber der Berstscheibenebene zu neigen, so daß der Winkel zwischen Ebene und Messerschneide größer oder kleiner als 90° ist.

Zwischen den Rahmenteilen wird eine Berstscheibe eingespannt. Die Einspannung erfolgt in bekannter Weise z.B. mit Hilfe einer Anzahl Schraubenbolzen, die in Abständen entlang des Rahmens angeordnet sind. In der neuen Druckentlastungsvorrichtung sind Berstscheiben in den unterschiedlichsten Ausführungsformen und aus allen Materialien, die üblicherweise für die Herstellung der Berstscheiben verwendet werden, verwendbar. Gegebenenfalls ist den verschiedenen Materialien durch Auswahl der Messer z.B. hinsichtlich Werkstoff oder Neigung der Messerschneide Rechnung zu tragen.

Besonders bewährt hat es sich, die Berstscheiben, vorzugsweise solche aus Kunststoffen, mit einer Sollbruchstelle im Umfang des oder der Messer zu versehen. Durch diese Maßnahme wird gewährleistet, daß bei Kontakt der Scheibe mit dem Messer der Trennvorgang momentan erfolgt und nicht dadurch verzögert wird oder im Extremfall unterbleibt, daß sich das Scheibenmaterial auswölbt und über die Messerschneide kriecht. Die Sollbruchstelle kann der Berstscheibe bereits bei der Herstellung eingeprägt sein; vorzugsweise wird sie mit dem Messer nach Einbau in die Druckentlastungsvorrichtung erzeugt.

Im folgenden werden verschiedene Ausführungsformen der erfindungsgemäßen Druckentlastungsvorrichtung unter Bezugnahme auf die beigefügten Zeichnungen näher erläutert:
- Fig. 1: zeigt im Querschnitt eine Druckentlastungsvorrichtung mit beidseitig eingelegtem Messer
- Fig. 2: zeigt im Querschnitt eine Druckentlastungsvorrichtung mit in beide Rahmenteile eingelegten Messern und Distanzscheiben
- Fig. 3: zeigt im Querschnitt eine Druckentlastungsvorrichtung mit in einem Rahmenteil eingelegten Messer und Distanzscheiben und im anderen Rahmenteil eingelegten Block
- Fig. 4: zeigt in Aufsicht eine Druckentlastungsvorrichtung mit rundem Rahmen und runder Berstscheibe.

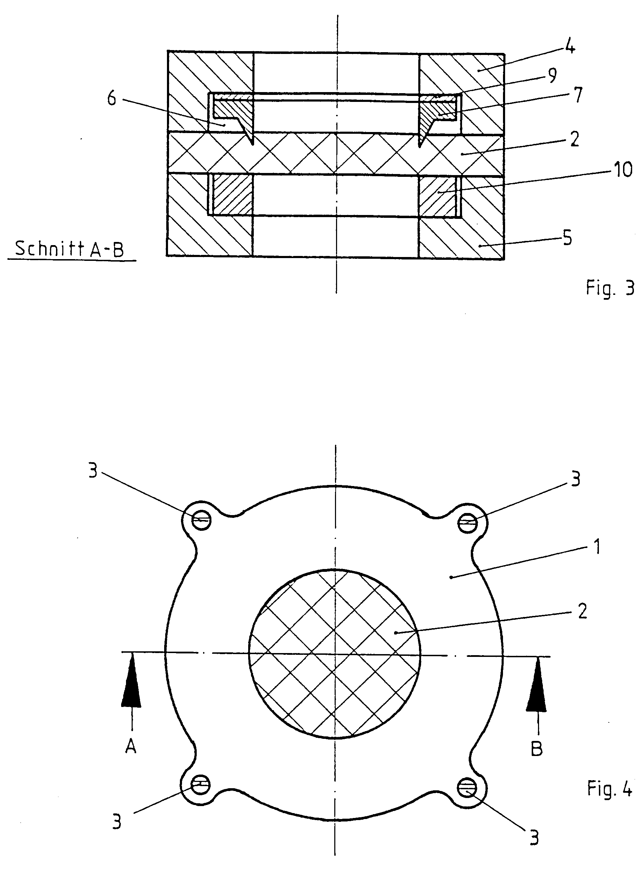

Wie aus Figur 4 hervorgeht, besteht die erfindungsgemäße Druckentlastungsvorrichtung aus einem Rahmen 1, in dem eine Berstscheibe 2 eingespannt ist, im vorliegenden Fall mit Hilfe von Schraubenbolzen 3, die entlang des Rahmens angeordnet sind.

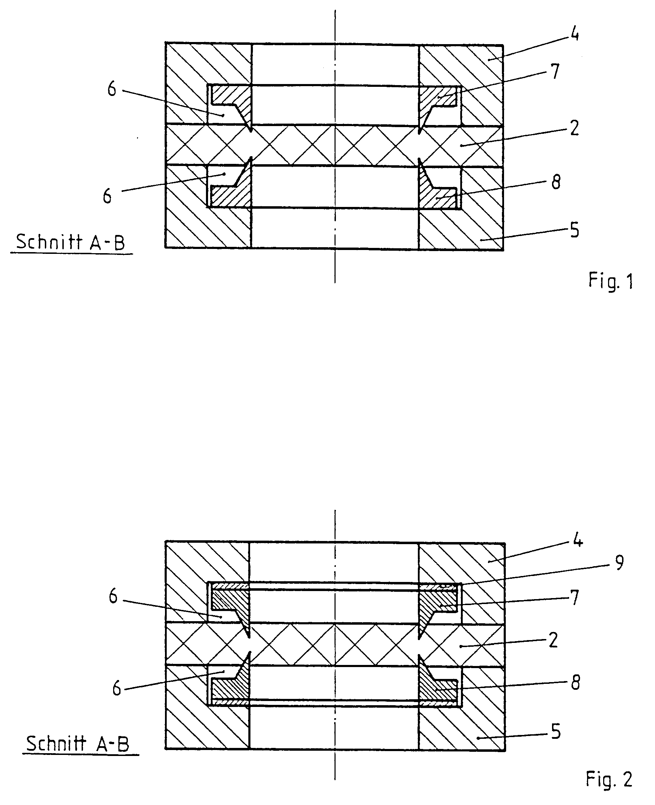

Die Figuren 1, 2 und 3 lassen erkennen, daß der Rahmen 1 aus zwei Rahmenteilen 4 und 5 besteht, die mit Vertiefungen 6 versehen sind. Die Vertiefungen dienen der Aufnahme von Messern 7 und 8, die, wie Fig. 2 und Fig. 3 zeigen, gegebenenfalls in Verbindung mit Distanzscheiben 9 verwendet werden können. Die Distanzscheiben erlauben es, einen bestimmten Messervorschub und damit einen bestimmten Ansprechdruck einzustellen. Fig. 3 zeigt eine Ausführungsform der neuen Druckentlastungsvorrichtung, in der lediglich der Rahmenteil 4 mit dem Messer 7 versehen ist, während der Rahmenteil 5 einen Block 10 enthält.

Die Wirkungsweise der neuen Druckentlastungsvorrichtung ist folgende:
Im Normalzustand befindet sich die Berstscheibe in der in den Figuren 1, 2 und 3 dargestellten Normallage. Ändert sich der Druck im Falle der Ausführungsformen der Figuren 1 und 2 auf einen Wert, der dem eingestellten Ansprechdruck entspricht, wölbt sich die Berstscheibe 2 in die eine oder die andere Richtung aus, trifft auf die Messer 7 oder 8 und wird durch die Messerschneide über den gesamten Umfang herausgeschnitten. In Fig. 3 ist eine Ausführungsform dargestellt, bei der die Membran auf einseitige Druckänderung reagiert, sich in Richtung des Rahmenteils 4 wölbt und bei Erreichen des Ansprechdrucks vom Messer 7 herausgetrennt wird.

## Patentansprüche

1. Druckentlastungsvorrichtung, die aus einem zweiteiligen Rahmen (1) besteht, zwischen dessen Teilen (4,5) eine Berstscheibe (2) eingespannt ist, dadurch gekennzeichnet, daß jeder Rahmenteil eine mit der Dichtfläche abschließende Vertiefung (6) zur Aufnahme jeweils eines Messers (7,8) oder jeweils eines mit der Dichtfläche stumpf abschließenden Blockes (10) oder eines Messers und eines Blockes enthält.

2. Druckentlastungsvorrichtung nach Anspruch 1, dadurch gekennzeichnet, daß der Abstand der Messer gegenüber der Berstscheibenebene durch Distanzkörper (9) verändert wird.

3. Druckentlastungsvorrichtung nach Anspruch 1 oder 2, dadurch gekennzeichnet, daß die Messerschneide gegenüber der Berstscheibenebene einen Winkel von 90° bildet.

4. Druckentlastungsvorrichtung nach Anspruch 1 oder 2, dadurch gekennzeichnet, daß die Messerschneide gegenüber der Berstscheibenebene einen von 90° abweichenden Winkel bildet.

5. Druckentlastungsvorrichtung nach einem oder mehreren der Ansprüche 1 bis 4, dadurch gekennzeichnet, daß die Berstscheibe mit einer Sollbruchstelle versehen ist.

## Claims

1. Relief device comprising a two-part frame (1), between the parts (4,5) whereof a bursting disc (2) is clamped, characterized in that each frame part comprises an indentation (6) finishing off with the sealing area, for taking up a cutting edge (7,8), or a block (10) finishing off level with the sealing area, or a cutting edge and a block, respectively.

2. Relief device according to claim 1, characterized in that the relative distance between the cutting edges and the bursting disc level is altered by distance members (9).

3. Relief device according to claim 1 or 2, characterized in that the angle formed by the cutting edge and the bursting disc level is 90°.

4. Relief device according to claim 1 or 2, characterized in that the angle formed by the cutting edge and the bursting disc level differs from 90°.

5. Relief device according to one or more of claims 1 through 4, characterized in that the bursting disc features a predetermined breaking point.

## Revendications

1. Dispositif de détente consistant d'un cadre (1) en deux parties (4,5) entre lesquelles est encastrée une plaque de rupture (2), **caractérisé en ce que** chaque partie du cadre comporte un creux (6) limité par la surface d'étanchéité pour accueillir chaqune soit un couteau (7,8), soit un bloc (10) touchant d'une manière épointée à la surface d'étanchéité, soit un couteau et un bloc.

2. Dispositif de détente selon la revendication 1, **caractérisé en ce que** la distance entre les couteaux et le plan de la plaque de rupture est changée par des organes d'écartement.

3. Dispositif de détente selon les revendications 1 ou 2, **caractérisé en ce que** la lame du couteau forme un angle de 90° par rapport au plan de la plaque de rupture.

4. Dispositif de détente selon les revendications 1 ou 2, **caractérisé en ce que** la lame du couteau forme un angle différent de 90° par rapport au plan de la plaque de rupture.

5. Dispositif de détente selon une ou plusieurs des revendications 1 ou 4, **caractérisé en ce que** la plaque de rupture est muni d'un point destiné à la cassure.
